Europäisches Patentamt

(19) European Patent Office

Office européen des brevets

(11) Numéro de publication : **0 101 654**
**B1**

(12) **FASCICULE DE BREVET EUROPÉEN**

(45) Date de publication du fascicule du brevet :
**11.12.85**

(21) Numéro de dépôt : **83401245.2**

(22) Date de dépôt : **16.06.83**

(51) Int. Cl.⁴ : **C 08 J 3/28**, C 08 J 3/24,
C 08 L 63/00 // (C08L63/00,
67:06)

(54) **Procédé de préparation de réseaux polymères de structure interpénétrée homogène.**

(30) Priorité : **28.06.82 FR 8211279**

(43) Date de publication de la demande :
**29.02.84 Bulletin 84/09**

(45) Mention de la délivrance du brevet :
**11.12.85 Bulletin 85/50**

(84) Etats contractants désignés :
**BE CH DE GB IT LI NL SE**

(56) Documents cités :
DE-A- 1 918 053
FR-A- 2 110 159
GB-A- 2 048 272
US-A- 3 252 923
**RGE REVUE GENERALE DE L'ELECTRICITE, no. 11, novembre 1981, page 826-829, Paris, FR. A.J. BERTEAUD et al.: "Les micro-ondes appliquées aux macromolécules filmogènes"**

(73) Titulaire : **ELECTRICITE DE FRANCE Service National
2, rue Louis Murat
F-75008 Paris (FR)**

(72) Inventeur : **Gourdenne, Albert
12, Place Marnac
F-31520 Ramonville St. Agne (FR)**
Inventeur : **Heintz, Pascal
19, rue Edmond Fariat
F-10000 Troyes (FR)**

(74) Mandataire : **Ahner, Francis et al
CABINET REGIMBEAU 26, avenue Kléber
F-75008 Paris (FR)**

**0 101 654**

## Description

La présente invention concerne un procédé de préparation de réseaux polymères de structure interpénétrée homogène, à partir d'un mélange d'au moins deux constituants prépolymères de base.

L'élaboration de réseaux polymères interpénétrés est habituellement conduite par voie thermique classique. Ce mode d'activation des réactions de réticulation des deux prépolymères est délicat car il implique, pour être mis en œuvre de façon satisfaisante, des cinétiques réactionnelles voisines. En effet, la structure finale doit être la plus homogène possible et en particulier ne doit pas comporter d'îlots ou de zones plus riches en un polymère particulier, c'est-à-dire qu'il faut éviter le phénomène de séparation des phases. Un tel résultat est difficile à atteindre dans la pratique car les mécanismes de réticulation des deux résines du mélange de base sont dans la très grande majorité des cas de type différent, de façon à éviter les pontages chimiques covalents entre les deux réseaux. De surcroît, il est pratiquement impossible dans la pratique de faire coïncider les cinétiques de polymérisation des constituants prépolymères de base.

La synthèse des réseaux interpénétrés est usuellement réalisée grâce à une activation thermique des diverses réactions de réticulation, réalisées en étuve ou en autoclave, et l'obtention de structures finales homogènes est rarissime du fait des difficultés rencontrées pour faire coïncider les vitesses de réticulation respectives. Le plus souvent on obtient des structures avec séparation de phases. Un tel inconvénient majeur a d'ailleurs limité considérablement le développement des matériaux polymères interpénétrés.

Conformément au procédé de la présente invention, on applique au mélange de prépolymères de base un rayonnement micro-ondes de spectre de fréquences choisi pour qu'il interagisse préférentiellement avec le premier prépolymère et de densité de puissance choisie pour qu'il active directement la réaction exothermique de réticulation du premier prépolymère, tout en ne déclenchant la réticulation du second prépolymère que sous l'action conjuguée de la chaleur due à l'interaction de l'énergie micro-ondes avec le second prépolymère et de la chaleur apportée par la réaction de réticulation du premier prépolymère, ce qui permet la propagation conjointe des deux réactions de réticulation avec des vitesses voisines.

Selon une autre caractéristique de la présente invention, les deux constituants prépolymères de base se réticulent selon des mécanismes de polymérisation différents. En particulier, l'un des prépolymères de base peut se réticuler selon un mécanisme de polymérisation radicalaire, alors que l'autre prépolymère de base peut se réticuler selon un mécanisme de polymérisation par polycondensation.

Le prépolymère se réticulant selon un mécanisme de polymérisation radicalaire peut par exemple être avantageusement constitué par une résine de polyester insaturé, en particulier par une solution à 70 % en poids de résine polyester insaturé dans un solvant tel que le styrène.

Le prépolymère du mélange de base qui se réticule selon un mécanisme de polymérisation par polycondensation peut par exemple être avantageusement constitué par une résine époxyde, en particulier de type D.G.E.B.A. additionnée d'un durcisseur tel que le diaminodiphénylméthane.

Un tel mélange de deux constituants prépolymères de base peut par exemple être constitué par environ 20 % en poids d'une solution de résine polyester insaturé et par environ 80 % en poids d'une résine époxyde additionnée d'un durcisseur.

Selon une variante du procédé de la présente invention, les deux constituants prépolymères de base peuvent également se réticuler selon des mécanismes de polymérisation identiques en particulier par polycondensation.

Selon une caractéristique additionnelle du procédé de préparation de la présente invention, le mélange d'au moins deux constituants prépolymères de base peut en outre contenir d'autres additifs, tels qu'une charge de renforcement, en particulier une charge minérale telle qu'une charge de fibres de verre.

Le procédé objet de la présente invention peut être mis en œuvre en utilisant indifféremment un traitement micro-ondes en cavité monomode ou en cavité multimodes. Le spectre de fréquences du rayonnement micro-ondes utilisé peut par exemple contenir des fréquences comprises entre environ 0.5 et environ 100 GHz, de préférence comprises entre environ 1 et environ 5 GHz, et en particulier une fréquence de l'ordre de 2,5 GHz.

La présente invention se rapporte également aux réseaux polymères de structure interpénétrée homogène obtenus par la mise en œuvre du procédé précédemment décrit.

D'autres caractéristiques et avantages de la présente invention apparaîtront à la lecture de la description détaillée faite ci-après notamment en référence aux figures annexées sur lesquelles :

la figure 1 représente schématiquement une structure interpénétrée de caractère homogène d'un réseau époxy et d'un réseau polyester ;

la figure 2 représente le schéma de principe d'un dispositif à micro-ondes permettant la mise en œuvre du procédé de la présente invention ;

la figure 3 représente les courbes de variation en fonction du temps d'un certain nombre de paramètres expérimentaux lors d'une polymérisation d'un mélange donné à une puissance donnée ;

la figure 4 représente les courbes de variation de la température (en °C) en fonction du temps, obtenues pour des mélanges à composition variable et à une puissance donnée ;

la figure 5 représente les courbes de variation de la température (en °C) en fonction du temps,

2

obtenues lors de la polymérisation d'un mélange à composition donnée et à puissance variable, et

la figure 6 représente la courbe de variation de la température de transition vitreuse de réseaux interpénétrés en fonction du taux de polyester.

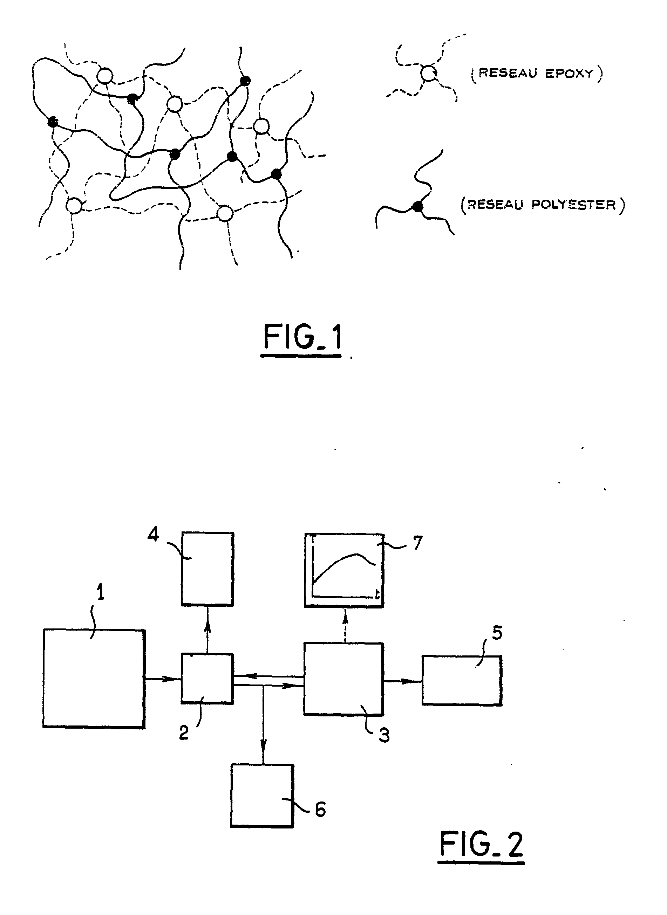

Dans le schéma du dispositif illustré à la figure 2, un générateur 1 de micro-ondes délivre un faisceau électromagnétique polarisé électriquement avec une fréquence de 2,45 GHz et avec une puissance Po comprise entre 0 et 1 kW qui se propage à l'intérieur d'un guide d'ondes selon le mode $TE_{01}$ comprenant un circulateur 2. Le faisceau atteint alors le réacteur 3 qui est constitué par un récipient cylindrique en pyrex avec une bonne transparence aux micro-ondes, le réacteur étant rempli avec le mélange des constituants prépolymères de base.

De là, le rayon initial peut être divisé en trois parties :

une partie qui est réfléchie par le réacteur dans le guide d'onde d'entrée et déviée, à travers son circulateur 2 ou un système à ferrites équivalent, vers une charge 4 qui absorbe les radiations ;

une partie est absorbée par l'échantillon, compte tenu des pertes diélectriques dans le cas des micro-ondes de 2,45 GHz, les entités polarisables sont les dipôles ;

une partie est transmise et absorbée par la seconde charge 5.

L'utilisation de deux charges évite des systèmes d'ondes stationnaires à l'intérieur du guide d'ondes et l'on dit que les ondes se propagent en mode progressif.

L'ensemble du dispositif comporte, en outre, des systèmes de régulation et de mesure, à savoir en particulier un Wattmètre 6 qui mesure les variations de puissance électrique associées aux différents faisceaux initial, réfléchi et transmis ainsi que les pertes diélectriques lorsque les micro-ondes traversent l'échantillon.

Les variations de la température T de l'échantillon traité par les micro-ondes sont mesurées grâce à un thermistor plongeant à l'intérieur d'un tube en pyrex rempli d'huile de silicone, qui est transparente aux rayonnements électromagnétiques, et qui est lui-même partiellement immergé dans le mélange de base à réticuler. Les variations en fonction du temps de ces différentes grandeurs sont stockées dans un ensemble d'enregistrement représenté schématiquement sous la référence 7.

On mentionnera ci-après à titre d'illustration quelques exemples de préparation de réseaux polymères de structure interpénétrée homogène conformément à l'objet de la présente invention.

Le mélange de prépolymères de base étudié ci-après est constitué comme suit :

1) Polyester insaturé     70 % en poids
   styrène              30 % en poids
   sans amorceur
2) Résine époxyde de type D.G.E.B.A.
   diaminodiphénylméthane (durcisseur).

Le mélange ci-dessus conduit à une structure polymère interpénétrée rigide, c'est-à-dire vitreuse, les deux réseaux de base étant eux-mêmes rigides.

Il est cependant parfaitement possible dans le cadre de la présente invention de partir d'autres mélanges de prépolymères de base conduisant individuellement à des réseaux mous, c'est-à-dire élastiques, ou rigides. Il est ainsi possible d'associer entre eux deux prépolymères mous ou encore un prépolymère mou avec un prépolymère rigide.

On observe que la nature des mécanismes de réticulation n'est pas modifiée fondamentalement par l'action des micro-ondes. Par exemple, dans le cas du mélange ci-dessus, le mécanisme de réticulation de la résine polyester insaturé en présence de styrène est celui d'une réaction de polymérisation radicalaire, et le mécanisme de la réaction de réticulation de la résine époxyde en présence de durcisseur celui d'une réaction de polycondensation.

En revanche, le procédé de la présente invention apporte des avantages déterminants par rapport au procédé d'activation par voie thermique classique à l'étuve ou à l'autoclave ; on observe en particulier :

une souplesse du choix de la puissance électrique du rayonnement micro-ondes, ce qui permet de rapprocher les cinétiques de réticulation des deux prépolymères et d'éviter l'inconvénient de la séparation de phases :

la possibilité d'arrêt instantané du chauffage micro-ondes en cas d'emballement des réactions ;

une structuration plus homogène des matériaux finis qui en particulier sont cuits à cœur — à la différence souvent observée de la réticulation par voie thermique — en raison de la pénétration du milieu polymérisable par les ondes électromagnétiques.

Les exemples particuliers mentionnés ci-après ont été réalisés par mise en œuvre d'un traitement micro-ondes à l'aide d'un guide d'ondes selon le mode $TE_{01}$ avec une fréquence de 2,45 GHz.


Exemple 1


Polymérisation d'un mélange donné à une puissance donnée


Une masse de 20 g du mélange de base précédemment défini a été placée dans un pilulier en pyrex. Les paramètres expérimentaux sont les suivants :

Po : puissance du rayonnement électromagnétique délivré par le générateur (unité : Watt) (Po = 50 W)

Pu : puissance dissipée dans l'échantillon par pertes diélectriques (unité : Watt)

T : température moyenne de l'échantillon (unité : °C)

T' = dT/dt     t : temps

T' : dérivée de la température par rapport au temps (unité : °C/minute)

P' = dPu/dt     Pu' : dérivée de la puissance par rapport au temps (unité : Watt/minute)

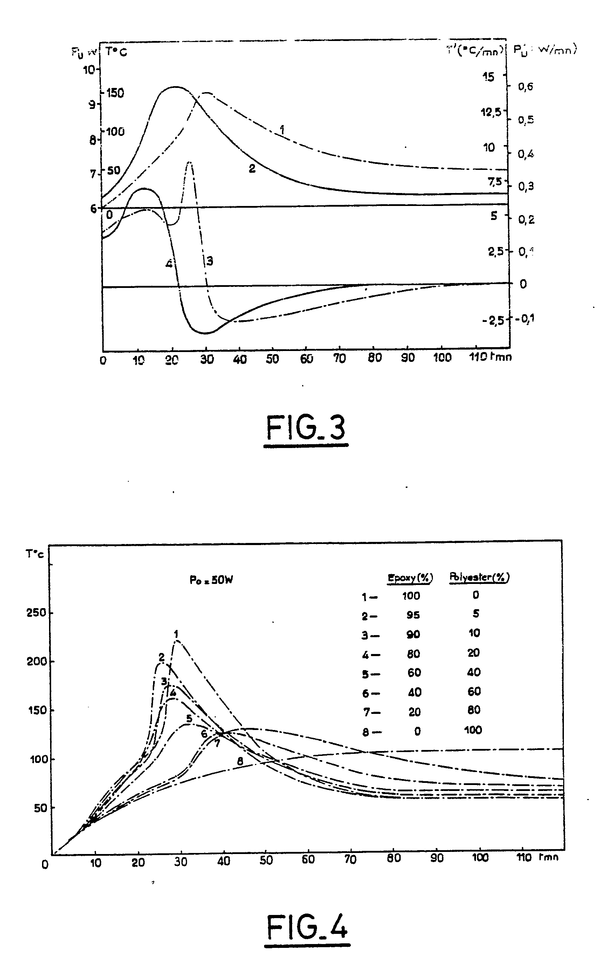

Les résultats expérimentaux sont mentionnés sous la forme des courbes figurant à la figure 3. Les quatre courbes représentées correspondent aux variations suivantes :

(1) T = T(t)

(2) Pu = Pu(t)

(3) T' = T'(t)

(4) Pu' = Pu'(t)

On y observe en particulier que la température s'accroît à partir de 0 °C, après avoir transitoirement atteint une valeur voisine de 50 °C correspondant à la transition de fluidification du mélange. Lorsque la température est suffisante, la réticulation devient intense, la température augmente et atteint un maximum (T : 147 °C) correspondant à une réticulation quasi complète. La décroissance observée au-delà du maximum correspond au refroidissement de la substance réticulée.

La puissance Pu augmente progressivement lorsque le mélange devient fluide et passe bientôt par un maximum avant que l'exothermie ne se développe. Le maximum correspond à la gélification du milieu réaction. La décroissance qui est ensuite observée correspond à l'intensification des réactions de pontage. Lorsque le matériau est totalement réticulé, Pu atteint une valeur palier.

Les courbes dérivées (3) et (4) permettent de mieux définir les points particuliers des courbes intégrales T et Pu.

Le mélange initialement pâteux (ou fluide) s'est transformé en un solide transparent, vitreux et de couleur jaune orangé.

## Exemple 2

Polymérisation d'un mélange à composition variable et à puissance donnée [Po = 50 W]

| N° essais | 1 | 2 | 3 | 4 | 5 | 6 | 7 | 8 |
|---|---|---|---|---|---|---|---|---|
| % époxy | 100 | 95 | 90 | 80 | 60 | 40 | 20 | O |
| % polyester | O | 05 | 10 | 20 | 40 | 60 | 80 | 100 |

Les résultats expérimentaux ont été regroupés à la figure 4 annexée.

On observe en particulier que les courbes T = T(t) de la figure 4 ont la même allure à l'exception de celle du polyester (courbe 8). Lorsqu'il s'agit de mélanges, l'exothermie se déclenche de plus en plus tard : le maximum se déplace vers les valeurs plus élevées du temps quand le pourcentage en polyester s'accroît, celui-ci ne polymérisant d'ailleurs pas à la puissance Po utilisée.

Les autres compositions (courbes 1, 2, 3, 4, 5, 6, 7) donnent régulièrement des matériaux polymérisés rigides. On s'attendrait à ce que la résine époxyde pure (essai n° 1) conduise à l'exothermie la plus rapide. Or il n'en est rien. Cette disposition est liée à l'état physique des mélanges qui sont plus mobiles — et donc qui dissipent mieux l'énergie — que la résine époxyde.

## Exemple 3

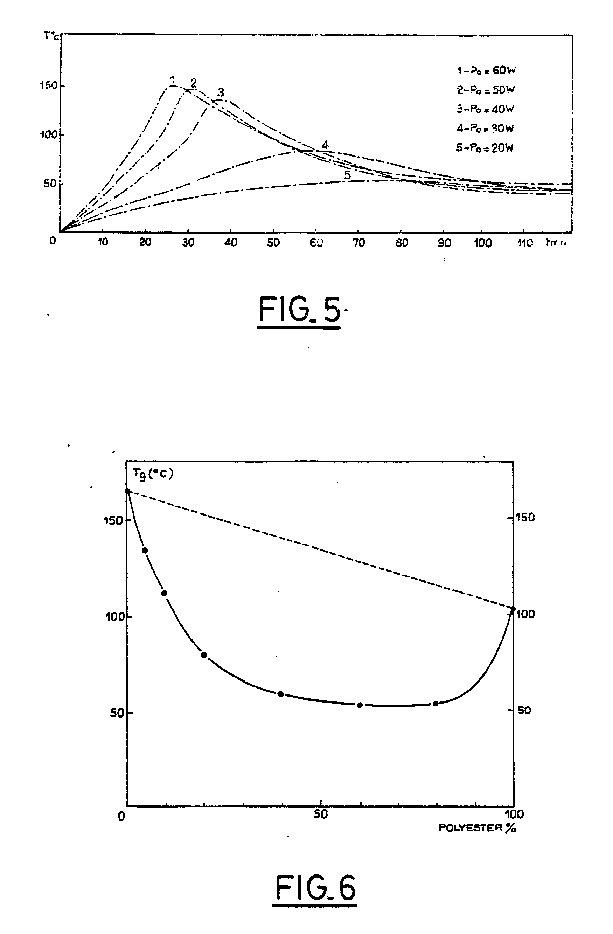

Polymérisation d'un mélange à composition donnée et à puissance variable (Fig. 5)

Mélange : époxyde 80 % — Polyester 20 %

Puissances Po : (1) 60 W — (2) 50 W — (3) 40 W

(4) 30 W — (5) 20 W.

Sans exclure l'éventualité d'un effet spécifique des micro-ondes sur les diverses réactions, les diverses courbes sont disposées les unes par rapport aux autres en accord avec l'hypothèse d'une conversion de Pu en chaleur, c'est-à-dire que leur exothermie est déplacée vers les valeurs élevées du temps lorsque l'on chauffe moins (Po diminue).

Il convient en particulier de remarquer que l'essai n° 1 (Po = 60 W) conduit à une structure finale opacte, c'est-à-dire présentant le phénomène de séparation de phase due à une divergence trop importante entre les deux cinétiques de réticulation des prépolymères de base. Un abaissement de la puissance Po a suffi pour faire disparaître ce phénomène et conduire à des matériaux homogènes.

La turbidité disparaît, en effet, pour Po ⩽ 40 W.

Exemple 4

Températures de transition vitreuse Tg des réseaux interpénétrés (fig. 6)

Les réseaux polymères interpénétrés sont amorphes et rigides à la température ordinaire (ou sont dans leur état vitreux). Ils peuvent être caractérisés par leur température de transition vitreuse Tg. La figure 6 montre l'évolution attendue de Tg en fonction du taux de polyester, cette variation étant caractéristique des réseaux interpénétrés, pour les échantillons préparés à 50 W.

Remarque : L'échantillon à 100 % de polyester a été préparé à Po = 140 W.

Bien entendu, la présente invention ne saurait être limitée aux exemples de mise en œuvre particuliers décrits, mais il est parfaitement possible d'en imaginer un certain nombre de variantes d'exécution. Il est en particulier possible de mettre en œuvre le procédé de l'invention à partir de mélanges de base contenant plus de deux prépolymères, contenant d'autres monomères ou encore à partir de mélanges de base où l'un et/ou l'autre prépolymère est remplacé par un monomère. En outre, le guide d'ondes utilisé peut être remplacé par des cavités multi-modes, des fours tunnels ou analogues.

**Revendications**

1. Procédé de préparation de réseaux polymères de structure interpénétrée homogène, à partir d'un mélange d'au moins deux constituants prépolymères de base, caractérisé en ce que l'on applique audit mélange un rayonnement micro-ondes de spectre de fréquences choisi pour qu'il interagisse préférentiellement avec le premier prépolymère et de densité de puissance choisie pour qu'il active directement la réaction exothermique de réticulation du premier prépolymère, tout en ne déclenchant la réticulation du second prépolymère que sous l'action conjuguée de la chaleur due à l'interaction de l'énergie micro-ondes avec le second prépolymère et de la chaleur apportée par la réaction de réticulation du premier prépolymère, ce qui permet la propagation conjointe des deux réactions de réticulation avec des vitesses voisines.

2. Procédé selon la revendication 1, caractérisé en ce que les deux constituants prépolymères de base se réticulent selon des mécanismes de polymérisation différents.

3. Procédé selon l'une des revendications 1 et 2, caractérisé en ce que l'un des constituants prépolymères de base se réticule selon un mécanisme de polymérisation radicalaire et en ce que l'autre constituant prépolymère de base se réticule selon un mécanisme de polymérisation par polycondensation.

4. Procédé selon la revendication 3, caractérisé en ce que l'un des constituants prépolymères de base est constitué par une résine de polyester insaturé et en ce que l'autre constituant prépolymère de base est constitué par une résine époxyde.

5. Procédé selon la revendication 4, caractérisé en ce que le mélange des deux constituants prépolymères de base est constitué par un mélange d'environ 20 % en poids d'une solution dans le styrène d'une résine de polyester insaturé et d'environ 80 % en poids d'une résine époxyde additionnée d'un durcisseur.

6. Procédé selon la revendication 1, caractérisé en ce que les deux constituants prépolymères de base se réticulent selon des mécanismes de polymérisation par polycondensation.

7. Procédé selon l'une des revendications 1 à 6, caractérisé en ce que le mélange d'au moins deux constituants prépolymères de base contient en outre d'autres additifs tels qu'une charge de renforcement, en particulier d'une charge minérale telle qu'une charge de fibres de verre.

8. Procédé selon l'une des revendications 1 à 7, caractérisé en ce que l'on utilise un traitement micro-ondes en cavité monomode.

9. Procédé selon l'une des revendications 1 à 7, caractérisé en ce que l'on utilise un traitement micro-ondes en cavité multimodes.

10. Procédé selon l'une des revendications 1 à 9, caractérisé en ce que le spectre de fréquences utilisé contient des fréquences comprises entre environ 0,5 et environ 100 GHz, de préférence comprises entre environ 1 et environ 5 GHz, en particulier une fréquence de l'ordre de 2,5 GHz.

11. Réseaux polymères de structure interpénétrée homogène obtenus par la mise en œuvre du procédé selon l'une des revendications 1 à 10.

**Claims**

1. Method of preparing polymer lattices of homogenous interpenetrated structure starting from a mixture of at least two basic prepolymer constituents, characterized in that a microwave radiation is applied to the said mixture, the microwave radiation having a frequency spectrum chosen in order that it may preferentially interact with the first prepolymer and of a power intensity selected in order that it directly activates the exothermic cross-linking reaction of the first prepolymer, whilst only triggering the cross-linking of the second prepolymer under the combined action of the heat due to the interaction of the microwave energy with the second prepolymer and the heat introduced by the cross-linking reaction of the first prepolymer which makes possible the combined propagation of the two cross-linking reactions at similar speeds.

2. Method according to claim 1, characterized in that the two basic prepolymer constituents are cross-linked according to different polymerisation mechanisms.

3. Method according to one of claims 1 and 2, characterized in that one of the basic prepolymer constituents is cross-linked according to a free radical polymerisation mechanism and the other basic prepolymer constituent is cross-linked according to a polymerisation mechanism by polycondensation.

4. Method according to claim 3, characterized in that one of the basic prepolymer constituents is an unsaturated polyester resin and the other basic prepolymer constituent is an epoxide resin.

5. Method according to claim 4, characterized in that the mixture of the two prepolymer constituents comprises of a mixture of about 20 % by weight of a solution of an unsaturated polyester resin in a styrene and of about 80 % by weight of epoxide resin with a hardener added.

6. Method according to claim 1, characterized in that the two basic prepolymer constituents are cross-linked according to polymerisation mechanisms by polycondensation.

7. Method according to one of claims 1 to 6, characterized in that the mixture of at least two basic prepolymer constituents contains moreover other additives such as a reinforcing charge, in particular a mineral charge such as a charge of glass fibres.

8. Method according to one of claims 1 to 7, characterized in that a microwave treatment in a monomode cavity is used.

9. Method according to one of claims 1 to 7, characterized in that a microwave treatment in multimode cavity is used.

10. Method according to one of claims 1 to 9, characterized in that the frequency spectrum used comprises frequencies between about 0.5 and about 100 GHz, preferably between about 1 and approximately 5 GHz, and more particularly a frequency of the order of 2.5 GHz.

11. Polymer lattices of homogeneous interpenetrated structure obtained by carrying out the method according to one of claims 1 to 10.

**Patentansprüche**

1. Verfahren zur Herstellung von polymeren Netzen homogener, sich gegenseitig durchdringender Struktur, ausgehend von einer Mischung von wenigstens zwei vorpolymeren Basisbestandteilen, dadurch gekennzeichnet, daß man die genannte Mischung mit Mikrowellen bestrahlt, deren Frequenzspektrum so gewählt wird, daß sie vorzugsweise mit dem ersten Vorpolymer wechselwirken, und deren Leistungsdichte so gewählt wird, daß sie die exotherme Vernetzungsreaktion des ersten Vorpolymers direkt aktivieren, während die Vernetzung des zweiten Vorpolymers erst unter der gekoppelten Einwirkung der Wärme ausgelöst wird, welche von der Wechselwirkung der Mikrowellenenergie mit dem zweiten Vorpolymer und von der Wärme, die durch die Vernetzungsreaktion des ersten Vorpolymers geliefert wird, herrührt, was die gemeinsame Ausbreitung der zwei Vernetzungsreaktionen mit benachbarten Geschwindigkeiten erlaubt.

2. Verfahren nach Anspruch 1, dadurch gekennzeichnet, daß die zwei vorpolymeren Basisbestandteile sich gemäß verschiedener Polymerisationsmechanismen vernetzen.

3. Verfahren nach einem der Ansprüche 1 und 2, dadurch gekennzeichnet, daß der eine der vorpolymeren Basisbestandteile sich gemäß eines radikalartigen Polymerisationsmechanismus vernetzt, und dadurch, daß der andere vorpolymere Basisbestandteil sich gemäß eines Polymerisationsmechanismus durch Polykondensation vernetzt.

4. Verfahren nach Anspruch 3, dadurch gekennzeichnet, daß der eine der vorpolymeren Basisbestandteile durch ein ungesättigtes Polyesterharz gebildet ist und dadurch, daß der andere vorpolymere Basisbestandteil durch ein Epoxyharz gebildet ist.

5. Verfahren nach Anspruch 4, dadurch gekennzeichnet, daß die Mischung der zwei vorpolymeren Basisbestandteile durch eine Mischung von ungefähr 20 Gewichts-% einer Lösung von ungesättigtem Polyesterharz in Styrol und ungefähr 80 Gewichts-% eines Epoxyharzes, welchem ein Härtemittel beigemischt wurde, gebildet ist.

6. Verfahren nach Anspruch 1, dadurch gekennzeichnet, daß die zwei vorpolymeren Basisbestandteile sich gemäß Polymerisationsmechanismen durch Polykondensation vernetzen.

7. Verfahren nach einem der Ansprüche 1 bis 6, dadurch gekennzeichnet, daß die Mischung von wenigstens zwei vorpolymeren Basisbestandteilen darüber hinaus andere Zusätze, wir einen Füllstoff zur Verstärkung, insbesondere einen mineralischen Füllstoff wie Glasfaserfüllstoff, enthält.

8. Verfahren nach einem der Ansprüche 1 bis 7, dadurch gekennzeichnet, daß man eine Behandlung mit Monomoden-Hohlraum-Mikrowellen verwendet.

9. Verfahren nach einem der Ansprüche 1 bis 7, dadurch gekennzeichnet, daß man eine Behandlung mit Multimoden-Hohlraum-Mikrowellen verwendet.

10. Verfahren nach einem der Ansprüche 1 bis 9, dadurch gekennzeichnet, daß das verwendete Frequenzspektrum Frequenzen zwischen einschließlich etwa 0,5 und etwa 100 GHz, vorzugsweise zwischen einschließlich etwa 1 und etwa 5 GHz, insbesondere eine Frequenz der Ordnung von 2,5 GHz, umfaßt.

11. Polymere Netze homogener, sich gegenseitig durchdringender Struktur, welche durch die Durchführung des Verfahrens nach einem der Ansprüche 1 bis 10 erhalten wird.

(RESEAU EPOXY)

(RESEAU POLYESTER)

FIG_1

FIG_2

## FIG_3

## FIG_4

FIG. 5

FIG. 6

3